# EUROPÄISCHE PATENTSCHRIFT

(11) **EP 1 896 723 B1**
(45) Veröffentlichungstag und Bekanntmachung des Hinweises auf die Patenterteilung: **20.04.2011**
(21) Anmeldenummer: 06722448.5
(22) Anmeldetag: 20.04.2006
(51) Int. Cl.: F03D 3/06

(54) **WINDTURBINE MIT SENKRECHTER DREHACHSE**
WINDTURBINE COMPRISING A VERTICAL ROTATIONAL AXIS
TURBINE EOLIENNE A AXE DE ROTATION VERTICAL

(30) Priorität: 20.06.2005 CZ 20050399
(43) Veröffentlichungstag der Anmeldung: 12.03.2008
(73) Patentinhaber: Taus, Jan, 628 00 Brno (CZ)
(72) Erfinder: Taus, Jan, 628 00 Brno (CZ)
(74) Vertreter: Markes, Libor
(86) Internationale Anmeldenummer: PCT/CZ2006/000021
(87) Internationale Veröffentlichungsnummer: WO 2006/136117

(56) Entgegenhaltungen:
- GB-A- 2 356 431
- US-A- 377 602
- US-A- 1 148 989
- US-A- 2 441 635
- US-A- 4 365 934
- US-A- 4 748 808
- PATENT ABSTRACTS OF JAPAN Bd. 011, Nr. 044 (M-560), 10. Februar 1987 (1987-02-10) -& JP 61 207882 A (KOHEI UCHIDA), 16. September 1986 (1986-09-16)

## Beschreibung

### Technisches Gebiet

Die Erfindung betrifft eine Windturbine mit senkrechter Drehachse, deren Kreiselrad, das durch ein mit Verstellflügeln versehenes Tragwerk gebildet ist, an einer Mastspitze positioniert ist.

### Bisheriger Stand der Technik

Die Windkraftmaschinen gliedern sich in Maschinen mit waagerechter und die mit senkrechter Achse. Die meisten heutzutage im Einsatz stehenden Windkraftwerke sind Windmühlen mit Dreiblattschrauben. Das Drehmoment wird bei ihnen durch eine waagerechte Welle einem Stromgenerator zugeführt. Das ganze Aggregat ist an der Mastspitze in einer beträchtlichen Höhe positioniert. Bei der Konstruktion solcher Maschinen ist eine Reihe von Problemen zu lösen: Es ist sicherzustellen, dass die Schraube immer gegen die Windrichtung gerichtet ist. Mit Rücksicht auf die Masse des Aggregats ist es schwiereig, durch dessen Andrehen rechtzeitig auf die häufigen Änderungen der Windrichtung zu reagieren, wobei die das Andrehen des Aggregats gewährleistenden Motoren eine beträchtliche Stromversorgung benötigen. Bei einer schwachen Strömung muss die Schraube zwanghaft angekurbelt werden, und erst dann fängt das Aggregat an, Strom zu produzieren. Anstatt Elektrizität zu erzeugen, ist die Windmühle selbst auf Fremdstrombezug angewiesen. Nachteilig an dieser Konstruktion ist auch das Bremssystem, einschließlich Notbremse, das einem schnellen Verschleiß unterliegt und regelmäßige Überholung benötigt. Auch das Bremssystem weist einen beträchtlichen Anspruch an Stromversorgung auf. Vom Standpunkt der Ökologie aus ist an den verbreitetsten Windkraftwerken nachteilig, dass sie die Landschaft beneinträchtigen, in der sie aufgestellt sind, und dass ihre Schrauben Lärm produzieren. Der größte Nachteil der mit den eintretenden klimatischen Änderungen an Bedeutung zunimmt, ist, dass sie nicht imstande sind, den stärksten Windstößen zu widerstehen, und schon gegenwärtig kommt es zu Havarien aus diesem Grund.

In der Fachliteratur und in den Patentschriften werden viele verschiedene Lösungen von Windmotoren oder -turbinen mit senkrechter Achse vorgeschlagen. Bisher hat sich keine davon in einem größeren Maße verbreitet. Z.B. die in der internationalen Patentanmeldung WO 2004/015266 beschriebene Windturbine hat ein auf einem Mast angebrachtes Kreiselrad, wobei das Kreiselrad durch Paare symetrisch aufschlagbaren, an Enden der drehbaren Arme angebrachten Flügeln gebildet ist. Die Flügel eines jeden Paares in der zugeklappten Position sind tropfenförmig. Das Flügelpaar wird an der Wetterseite der Turbine aufgeklappt und an deren Leeseite zugeklappt. Gegenstand der Erfindung ist hier die Verbindung der mechanischen Systeme, die das Auf- und Zuklappen der gegenüberliegenden Flügelpaare betätigen. Nachteile dieser Lösung sind analogisch wie bei den Motoren mit waagerechter Achse, besonders deren geringe Resistenz gegenüber starke Windstöße. Eine Windturbine gemäß dem Stand der Technik ist aus Dokument US 2441635 bekannt.

Der Erfindung liegt die Aufgabe zugrunde, eine neue Bauweise der Windturbine mit senkrechter Achse zu entwerfen, die die erwähnten Nachteile der bekannten Lösungen wesentlich beschränken würde.

### Darstellung der Erfindung

Die obige Aufgabe wird durch eine Windturbine mit senkrechter Drehachse gelöst, deren Kreiselrad, das durch ein mit Verstellflügeln versehenes Tragwerk gebildet ist, an einer Mastspitze positioniert ist, wobei die Flügel in der zugeklappten Position Mantelsegmente eines linsenförmigen Körpers bilden, aufklappbar um radiale Bände und mit Mitteln zum Aufklappen an der Wetterseite und zum Zuklappen an der Leeseite der Turbine versehen sind.

Die Flügel können an der Ober- sowie an der Unterseite des Kreiselrads angebracht sein.

In einer vorteilhaften Ausführung wechseln die aufklappbaren Flügel mit festen radialen Segmenten.

Das Tragwerk kann durch einen Tragring gebildet sein, der mittels radialer Träger mit einem Hauptlager verbunden ist, oder durch eine Kreisplatte, die am Hauptlager befestigt ist.

Die Mittel zum Auf- und Zuklappen der Flügel können durch eine um senkrechte Achse drehbare Hubscheibe und durch Streben der Flügel gebildet sein.

Um die Stabilität der Turbine zu gewährleisten, hat der Mast vorteilhaft die Form eines Kegelstumpfes, in dessen Basis sich ein durch senkrechte Welle mit dem Kreiselrad verbundener Stromgenerator befindet.

### Kurze Beschreibung der Abbildungen

Die Erfindung ist in der Zeichnung anhand von Ausführungsbeispielen dargestellt. Es zeigen:

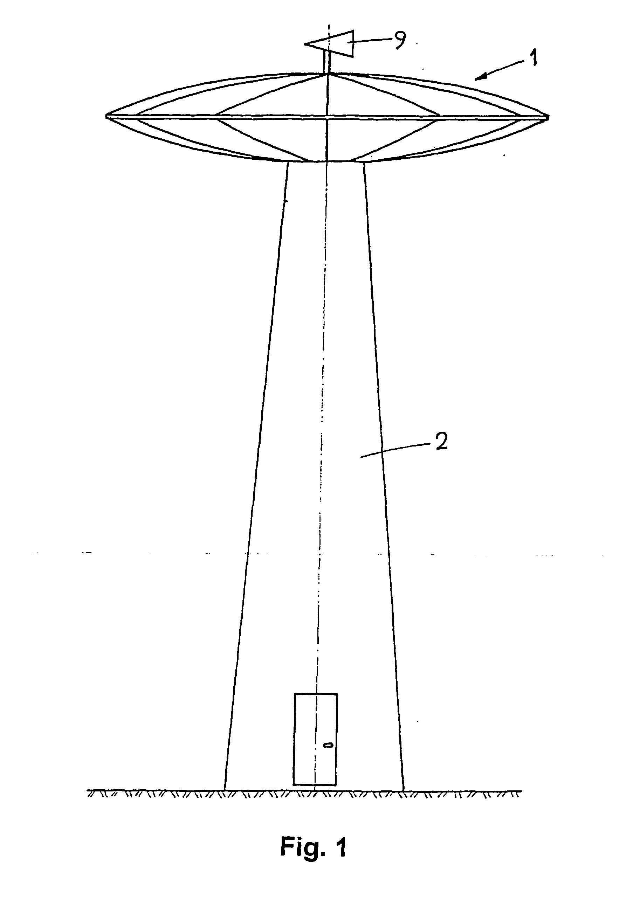

Fig. 1 eine vorteilhafte Ausführung der erfindungsgemäßen Windturbine in Seitenansicht,

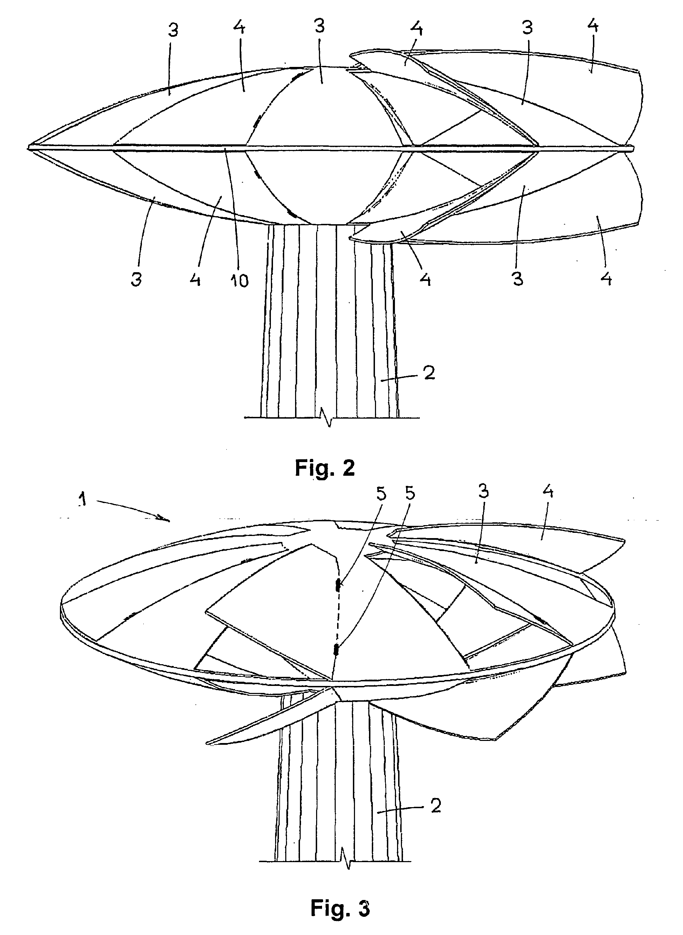

Fig. 2 und 3 ein Kreiselrad der Turbina nach Fig. 1 in Perspektive und

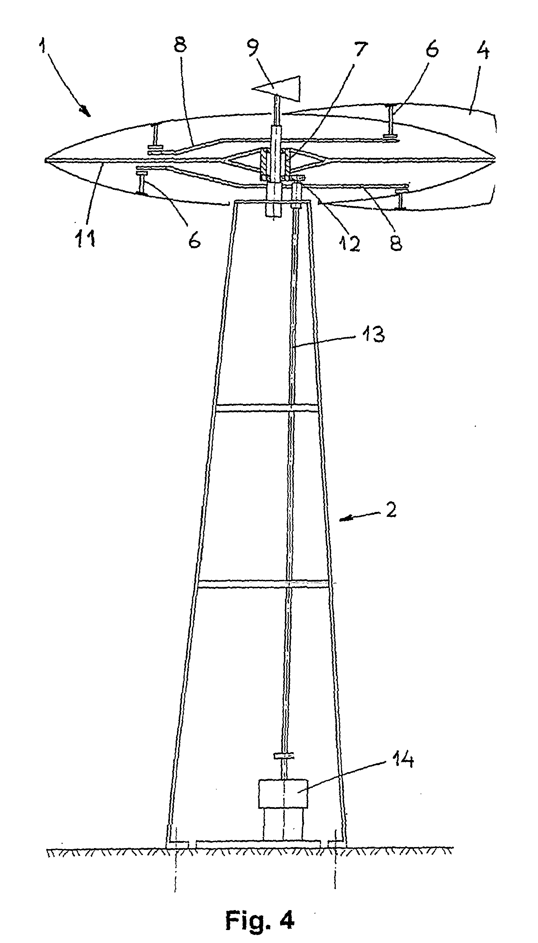

Fig. 4 die Ausführung der Turbine nach Fig. 1 im vertikalen Schnitt.

### Ausführungsbeispiele der Erfindung

Die erfindungsgemäße Windturbine ist durch ein Kreiselrad 1 gebildet, das an der Spitze eines Mastes 2 angebracht ist. Das Kreiselrad 1 ist im Ruhezustand ein symetrisches linsenförmiges Körper, das durch zwei Kugelhauben mit senkrechter Achse gebildet ist und das aus einem Tragwerk und einem an dem Tragwerk befestigten Mantel besteht. Der Mantel des Kreiselrades 2 ist vorwiegend aus radialen Segmenten zweier Art zusammengestellt, und zwar aus festen Segmenten 3 und aus Flügeln 4. Die Flügel 4 sind an den festen Segmenten 3 bzw. an deren Raumtragwerk drehbar um radiale Bände 5 gelagert, d.h. um die Bände 5, deren Achse in radialer Richtung verläuft. Die Flügel 4 sind mit Streben 6 veresehen, die zu deren Auf- und Zuklappen dienen. Das Kreiselrad 1 ist am Mast 2 mittels eines Hauptlagers 7 gelagert, das Bestandteil des Tragwerkes des Kreiselrades 1 ist. In der vorliegenden Ausführung der Erfindung leitet sich das Auf- und Zuklappen der Flügel 3 mittels der Streben 6 von drehbaren Hubscheiben 8 ab. Die Hubscheiben 8 sind in Bezug auf das Kreiselrad 1 relativ unbeweglich, jedoch werden sie durch einen Stellantrieb immer so angedreht, dass die Flügel 4 an der Wetterseite aufklappen und an der Leeseite zuklappen. Das Andrehen der Hubscheiben 8 ist von der aktuellen Windrichtung abhängig, die mit einem Richtungsanzeiger 9 indiziert wird. In einer anderen Ausführung können die Flügel 4 unabhängig voneinender mittels elektromechanischer oder pneumatischer computergesteuerter Einrichtungen betätigt werden, wobei die Möglichkeit besteht, den Hub der Flügel 4 zu regulieren und diese im Notfall sofort zuzuklappen. In der beschreibenden Ausführung ist das Tragwerk des Kreiselrads 1 durch einen Tragring 10 gebildet, der mit dem Hauptlager 7 mittels radialer Träger 11 verbunden ist. In einer anderen Ausführung kann das Tragwerk durch eine Kreisplatte gebildet sein, die an dem Hauptlager 7 befestigt ist. Einen Bestandteil des Tragwerks bilden auch die festen Segmente 2 bzw. deren Raumtragwerk. Das Drehmoment wird vom Kreiselrad 1 über Zahnradgetriebe 12 und senkrechte Welle 13 dem am Fuß des Mastes 2 befindlichen Stromgenerator 14 übertragen. Der Mast 2 ist in Form eines Kegelstumpfes ausgeführt, die mit der Form des Kreiselrads 1 optisch harmonisiert.

Die Turbine wird in Betrieb gesetzt, indem die an einer Hälfte des Kreiselrads 1 angebrachten Flügel 4 in einem Winkel von 45° bis 70° aufgekippt werden, die bisher Bestandteil des glatten linsenförmigen Mantels waren. Die Turbine fängt an zu drehen. In dem Augenblick, wo die Flügel 4 an der Leeseite angelangt sind, werden sie zugeklappt und nachdem die zugeklappten Flügel an der Wetterseite angelangt sind, werden sie wieder aufgeklappt. Jede, auch die winzigste Änderung der Windrichtung wird durch den Richtungsanzeiger 9 indiziert, der die Signaleingabe der Steuereinheit zuführt. Diese verstellt demnach die Stelle, wo das Aufklappen der Flügel 4 beginnt. Durch Zuklappen aller Flügel 4 kommt die Turbine zum Stillstand. Der Kreiselradkörper weist dann eine glatte Oberfläche auf und leistet dem Wind fast keinen Widerstand - der festgestellte Widerstandsbeiwert Cₓ = 0,097. Die Leistung der Turbine ist durch den Grad des Aufklappens der Flügel 4 regulierbar. Bei der Typenprüfung wurden fast keine Geräusche wahrgenommen.

## Patentansprüche

1. Windturbine mit senkrechter Drehachse, deren Kreiselrad, das durch ein mit Verstellflügeln versehenes Tragwerk gebildet ist, an einer Mastspitze positioniert ist, **dadurch gekennzeichnet, dass** die Flügel (4) in der zugeklappten Position Mantelsegmente eines linsenförmigen Körpers bilden, aufklappbar um radiale Bände (5) und mit Mitteln zum Aufklappen an der Wetterseite und zum Zuklappen an der Leeseite der Turbine versehen sind.

2. Windturbine nach Anspruch 1, **dadurch gekennzeichnet, dass** die Flügel (4) an der Ober- sowie an der Unterseite des Kreiselrads (1) angebracht sind.

3. Windturbine nach Anspruch 1 oder 2, **dadurch gekennzeichnet, dass** die aufklappbaren Flügel (4) mit festen radialen Segmenten (3) wechseln.

4. Windturbine nach Ansprüchen 1 bis 3, **dadurch gekennzeichnet, dass** das Tragwerk durch ein Tragring (10) gebildet ist, der mittels radialer Träger (11) mit einem Hauptlager (7) verbunden ist.

5. Windturbine nach Ansprüchen 1 bis 3, **dadurch gekennzeichnet, dass** das Tragwerk durch eine Kreisplatte gebildet ist, die am Hauptlager (7) befestigt ist.

6. Windturbine nach Ansprüchen 1 bis 5, **dadurch gekennzeichnet, dass** die Mittel zum Auf- und Zuklappen der Flügel durch eine um senkrechte Achse drehbare Hubscheibe und durch Streben der Flügel gebildet sind.

7. Windturbine nach Ansprüchen 1 bis 6, **dadurch gekennzeichnet, dass** der Mast (2) die Form eines Kegelstumpfes hat, in dessen Basis sich ein durch senkrechte Welle (13) mit dem Kreiselrad (4) verbundener Stromgenerator (14) befindet.

## Claims

1. A wind turbine with a vertical axis of rotation and with a rotor formed by a supporting framework with tipping blades on the top of a mast, wherein the blades (4) which in the closed position form radial segments of the casing of a lentil-shaped rotor (1) body and tilt around their radial hinges (5), comprise means for opening on the windward side and for closing on the leeward side of the turbine.

2. The wind turbine according to claim 1, wherein the blades (4) are placed on the top and on the bottom side of the rotor (1).

3. The wind turbine according to claim 1 or 2, wherein the tipping blades (4) alternating with fixed radial segments (3) along the perimeter.

4. The wind turbine according to claims 1 to 3, wherein the supporting framework of the rotor (1) consists of a ring (10) interconnected with a central bearing (7) by means of radial girders (11).

5. The wind turbine according to claims 1 to 3, wherein the supporting framework of the rotor (1) consists of a circular plate fixed to the central bearing (7).

6. The wind turbine according to claims 1 to 5, wherein the means for opening and closing the blades (1) consists of a disc cam (8) revolving around the vertical axis and of blade props (6).

7. The wind turbine according to claims 1 to 6, wherein the mast (2) in the shape of a truncated cone has an electricity generator (14) in its base connected to the rotor (1) by means of a vertical shaft (13).

## Revendications

1. Turbine de vent à une axe verticale de rotation ayant un rotor constitué d'une construction d'appui munie d'ailes basculantes, et fixé à la cime d'un mât, **caractérisée en ce que** les ailes (1) forment en position de fermeture des segments radiaux fixes d'un revêtement du corps lenticulaire du rotor (1), sont basculantes par l'intermédiaire de pentures radiaux (5) et sont pourvus d'un dispositif permettant leur ouverture sur le côté exposé au vent ainsi que leur fermeture sur le côté à l'abri du vent de la turbine de vent.

2. Turbine de vent selon la revendication 1, **caractérisée en ce que** les ailes (4) sont fixées sur les deux extrémités du rotor (1),

3. Turbine de vent selon la revendication 1 ou 2, **caractérisée en ce que** les ailes basculantes (4) se relaient au long du circonférence du corps de celle-ci avec des segments radiaux fixes (3).

4. Turbine de vent selon les revendications 1 à 3, **caractérisée en ce que** la construction d'appui du rotor (1) est constituée d'un anneau (10) interconnecté avec un palier centrale (7) à l'aide d'appuis radiaux (11).

5. Turbine de vent selon les revendications 1 à 3, **caractérisée en ce que** la construction d'appui du rotor (1) est constituée d'un madrier fixé sur le palier centrale (7).

6. Turbine de vent selon les revendications 1 à 5, **caractérisée en ce que** le dispositif d'ouverture et de fermeture des ailes est constitué de cames à disques (8) rotatrices autour d'un axe verticale et d'entretoises (6) des ailes (4).

7. Turbine de vent selon les revendications 1 à 6, **caractérisée en ce que** le mât (2) a une forme du cône tronqué dont la base abrite un générateur (14) d'électricité interconnecté par un treuil verticale (13) avec le rotor (1).
